(19) Europäisches Patentamt
European Patent Office
Office européen des brevets

(11) Veröffentlichungsnummer: **0 093 081**
**B1**

(12) # EUROPÄISCHE PATENTSCHRIFT

(45) Veröffentlichungstag der Patentschrift: **19.03.86**

(21) Anmeldenummer: **83810157.4**

(22) Anmeldetag: **18.04.83**

(51) Int. Cl.⁴: **C 07 F 9/38**, C 07 F 9/40, C 07 F 9/30, C 07 F 9/32, C 07 F 9/58, A 01 N 57/22, A 01 N 57/24

(54) **Herbizide und pflanzenwuchsregulierende Mittel.**

(30) Priorität: **23.04.82 CH 2500/82**
**11.11.82 CH 6585/82**

(43) Veröffentlichungstag der Anmeldung: **02.11.83 Patentblatt 83/44**

(45) Bekanntmachung des Hinweises auf die Patenterteilung: **19.03.86 Patentblatt 86/12**

(84) Benannte Vertragsstaaten: **AT BE CH DE FR GB IT LI NL**

(56) Entgegenhaltungen:
**EP - A - 0 002 031**
**EP - A - 0 078 536**
**EP - A - 0 079 635**
**US - A - 4 039 588**

(73) Patentinhaber: **CIBA-GEIGY AG, Klybeckstrasse 141, CH-4002 Basel (CH)**

(72) Erfinder: **Maier, Ludwig, Dr., Im Lee 28, CH-4144 Arlesheim (CH)**

**EP 0 093 081 B1**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

LIBER, STOCKHOLM 1986

**Beschreibung**

Die vorliegende Erfindung betrifft (2-Nitro-5-phenoxy-bzw.-5-pyridoxy-phenylamino)-alkyl phosphin- und -phosphonige Säure-Derivate, Verfahren zu ihrer Herstellung, sie enthaltende herbizide und pflanzenwuchs regulierende Mittel aowie die Verwendung dieser Verbindungen oder sie enthaltender Mittel zur Bekämpfung von unerwünschtem Pflanzenwuchs und zur Beeinflussung des Pflanzenwuchses.

Die neuen Verbindungen gemäss vorliegender Erfindung entsprechen der allgemeinen Formel I

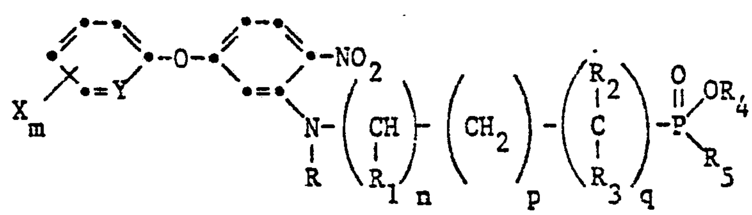

worin

X Halogen, $CF_3$, $NO_2$, CN, $CONH_2$ oder $CSNH_2$,
Y Stickstoff oder -CH=,
R Wasserstoff, $C_1$-$C_4$-Alkyl oder Aralkyl mit 1-4 Kohlenstoffatomen im Alkylteil,
$R_1$ $C_1$-$C_4$-Alkyl,
$R_2$ $C_1$-$C_4$-Alkyl, Phenyl oder -PO$(OR_6)_2$,
$R_3$ Wasserstoff oder $C_1$-$C_4$-Alkyl,
$R_4$ Wasserstoff, $C_1$-$C_4$-Alkyl oder ein Kation,
$R_5$ Wasserstoff oder $C_1$-$C_4$-Alkyl,
$R_6$ Wasserstoff oder $C_1$-$C_4$-Alkyl,
m eine Zahl von Null bis drei,
n Null oder eins,
p eine Zahl von Null bis drei und
q Null oder eins bedeuten, wobei

$R_1$ und $R_3$ zusammen auch für eine gegebenenfalls substituierte $C_1$-$C_3$-Alkylenkette stehen können, und wobei mindestens eins der Symbole n, p und q eine von Null verschiedene Zahl bedeutet.

Strukturähnliche Nitro-diaryläther-aminoalkylphosphonsäurederivate wurden kürzlich in der EP-A- 79635 beschrieben.

In der Definition der Formel I steht Alkyl in der Regel für Methyl, Aethyl, n-Propyl, i-Propyl, sowie die isomeren Butylreste. Alkyl ist dabei auch als Teil eines anderen Restes wie z.B. Aralkyl zu verstehen.

Halogen steht im allgemeinen für Fluor, Chlor, Brom oder Jod. Bevorzugt sind Fluor und insbesondere Chlor.

Beispiele für definitionsgemässe Aralkylreste sind im allgemeinen Phenylalkyl wie Benzyl, 2-Phenyläthyl, 3-Phenylpropyl, 1-Phenyläthyl, 2-Phenylpropyl, 1-Phenylpropyl. Bevorzugt ist Benzyl.

Die von $R_1$ und $R_3$ gebildete Alkylenkette enthält 1 bis 3 Kohlenstoffatome und ist durch niedere Alkylgruppen weiter substituiert. Bevorzugt ist eine Aethylen- oder Propylenbrücke. Ganz besonders bevorzugt ist die 2,2-Dimethyl-1,3-propylenbrücke.

Die freien Säurefunktionen der erfindungsgemässen Phosphin- und phosphonigen Säuren können als Salze vorliegen, d.h. ihre Säureprotonen sind durch andere Kationen ersetzt. Solche Kationen sind in der Regel Alkali- oder Erdalkalikationen, wie die von Natrium, Kalium, Calcium oder Magnesium; das Ammoniumkation; oder substituierte Ammoniumkationen wie die Kationen von Dimethylamin, Aethylamin, Trimethylamin, Triäthylamin, Bis-hydroxyläthyl-amin, Diäthylamin, Isopropylamin oder Diisopropylamin; oder quaternäre Ammoniumkationen wie das Tetramethylammoniumion, Tetraäthylammoniumion, Trimethyläthylammoniumion, Triäthylmethylammoniumion oder Diäthyldimethylammoniumion.

Die direkte Alkylenkette zwischen der Aminogruppe und der Phosphinsäuregruppe enthält vorzugsweise 1 bis 3 Kohlenstoffatome und kann durch weitere Substituenten wie niedere Alkylreste, Phenylreste oder Phosphonsäure oder -estergruppen substituiert sein.

Bevorzugt sind diejenigen Verbindungen der Formel I, in denen

a) m die Zahl zwei,
b) X Trifluormethyl oder Chlor,
c) R Wasserstoff,
d) die Zahlen n, p und q zusammen als Summe höchstens die Zahl drei,
e) $R_4$ Wasserstoff oder $C_1$-$C_3$-Alkyl und
f) $R_5$ Methyl oder Aethyl bedeuten.

Eine weitere Bevorzugung geniessen die Verbindungen der Formel 1, in denen Y die -CH= Gruppe und m die

Zahl zwei bedeuten und die beiden Reste X für Chlor in 2-Stellung und Trifluormethyl in 4-Stellung stehen, R Wasserstoff, $R_4$ Wasserstoff oder $C_1$-$C_3$-Alkyl und $R_5$ Wasserstoff, Methyl oder Athyl bedeuten und die Zahlen n, p und q zusammen als Summe höchstens die Zahl drei ergeben.

Eine ebensolche Bevorzugung geniessen die Verbindungen der Formel I, in denen Y Stickstoff bedeutet, der Pyridinring in 2-Stellung veräthert ist, m die Zahl eins und X Trifluormethyl in 5-Stellung bedeuten, R für Wasserstoff, $R_4$ für Wasserstoff oder $C_1$-$C_3$-Alkyl und $R_5$ für Wasserstoff, Methyl oder Aethyl stehen und die Zahlen n, p und q zusammen als Summe höchstens die Zahl drei ergeben.

Besonders bevorzugt sind die Verbindungen der folgenden Unterformeln

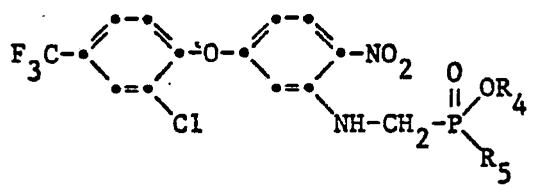

worin $R_4$ Wasserstoff, Methyl oder Aethyl und $R_5$ Methyl oder Aethyl bedeuten;

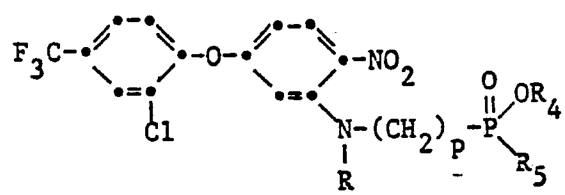

worin R Wasserstoff, Methyl oder Benzyl, $R_4$ Wasserstoff, Aethyl oder i-Propyl, $R_5$ Wasserstoff und p eine Zahl von 1 bis 3 bedeuten;
und

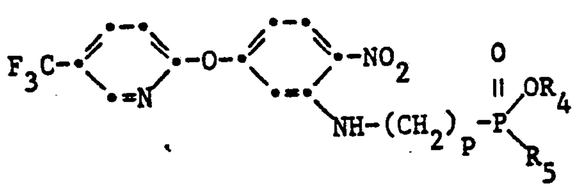

worin $R_4$ Wasserstoff, Aethyl oder i-Propyl, $R_5$ Methyl und p eine Zahl von 1 bis 3 bedeuten.

Als bevorzugte Einzelverbindungen sind zu nennen:
N-[2-Nitro-5-(2-chlor-4-trifluormethylphenoxy)-phenyl]-P-methyl-amino-methylphosphinsäureäthylester,
N-[2-Nitro-5-[2-chlor-4-trifluormethylphenoxy)-phenyl]-P-methyl-aminomethylphosphinsäure,
N-[2-Nitro-5-(2-chlor-4-trifluormethylphenoxy)-phenyl]-P-äthyl-aminomethylphosphinsäureäthylester und
N-[2-Nitro-5-(2-chlor-4-trifluormethylphenoxy)-phenyl]-P-äthyl-aminomethylphosphinsäure, und
N-[2-Nitro-5-(2-chlor-4-trifluormethylphenoxy)-phenyl]-N-methyl-aminoäthylphosphonigsäure.

Die Verbindungen der Formel I werden hergestellt, indem man einen Dinitrophenylaryläther der Formel II

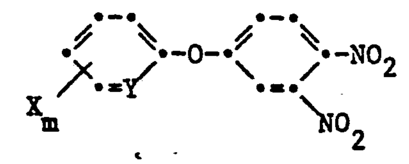

worin X, Y und m die unter Formel I gegebene Bedeutung haben, mit einem Aminoalkyl phosphonig, oder -phosphonsäurederivat der Formel III

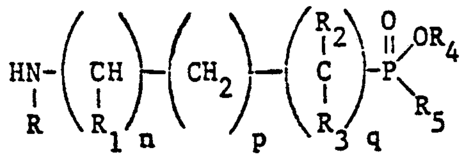

worin R, $R_1$, $R_2$, $R_3$, n, p und q die unter Formel I gegebene Bedeutung haben, und $R_4$ für $C_1$-$C_4$-Alkyl und $R_5$ für Wasserstoff oder$C_1$-$C_4$-Alkyl, stehen, umsetzt und gegebenenfalls durch Hydrolyse in die freie Säure und durch weitere Umsetzung mit einer Base in ein Salz überführt.

Die Umsetzung zu Verbindungen der Formel I wird mit Vorteil in einem aprotischen, inerten organischen Lösungsmittel bei Temperaturen von 50-150°C vorzugsweise 70-120°C durchgeführt.

Geeignete Lösungsmittel sind Kohlenwasserstoffe wie Benzol, Toluol, Xylol Cyclohexan; Acther wie Acthylenglykoldimethyläther, Diäthylenglykoldimethyläther, Tetrahydrofuran, Dioxan; Nitrile wie Acetonitril, Propionitril; und Dimethylsulfoxid.

Die Ausgangsverbindungen der Formeln II und III sind aus der EP-A-7471 bzw. aus G.M. Kosolapoff und L. Maier, Organic Phosphorus Compounds, Wiley & Sons, New York, Vol. 7 (1976) bekannt oder können analog zu den dort angegebenen Methoden hergestellt werden.

Die erfindungsgemässen Endprodukte der Formel 1 zeigen bei pre- und postemergenter Anwendung auf Unkräuter eine hervorragende herbizide Wirkung. Kulturpflanzen werden nur in geringem Masse oder bei höheren Aufwandmengen in ihrem Wachstum beeinflusst. Die Verbindungen der Formel I eignen sich daher in besonderer Weise zur selektiven Unkrautbekämpfung in Nutzpflanzenkulturen wie Mais, Soja, Baumwolle, Reis und Getreide wie Weizen, Gerste, Roggen und Hafer.

Darüberhinaus eignen sich die Wirkstoffe der Formel 1 in besonderem Masse zur Regulation des Pflanzenwachstums.

Insbesondere werden durch die Wirkstoffe der Formel I das Wurzelwachstum in Gerreide sowie die Keimung der Pflanzensamen gefördert.

Einige der erfindungsgemässen Wirkstoffe, hemmen das Wachstum einiger dikotyler Pflanzen, wie z.B. von Bodenbedecker-Leguminosen.

Die Erfindung betrifft somit auch herbizide und pflanzenwuchsregulierende Mittel, welche einen neuen Wirkstoff der Formel 1 enthalten, sowie Verfahren zur pre- und postemergenten Unkrautbekämpfung und zur Wuchsregulation.

Die Verbindungen der Formel I werden in unveränderter Form oder vorzugsweise als Mittel zusammen mit den in der Formulierungstechnik üblichen Hilfsmittel eingesetzt und werden daher z.B. zu Emulsionskonzentraten, direkt versprühbaren oder verdünnbaren Lösungen, verdünnten Emulsionen, Spritzpulvern, löslichen Pulvern, Stäubemitteln, Granulaten, auch Verkapselungcn in z.B. polymeren Stoffen in bekannter Weise verarbeitet. Die Anwendungsverfahren wie Versprühen, Vernebeln, Verstäuben, Verstreuen oder Giessen werden gleich wie die Art der Mittel den angestrebten Zielen und den gegebenen Verhältnissen entsprechend gewählt.

Die Formulierungen, d.h. die den Wirkstoff der Formel I und gegebenenfalls einen festen oder flüssigen Zusatzstoff enthaltenden Mittel, Zubereitungen oder Zusammensetzungen werden in bekannter Weise hergestellt, z.B. durch inniges Vermischen und/oder Vermahlen der Wirkstoffe mit Streckmitteln, wie z.B. mit Lösungsmitteln, festen Trägerstoffen, und gegebenenfalls oberflächenaktiven Verbindungen (Tensiden).

Als Lösungsmittel können in Frage kommen: Aromatische Kohlenwasserstoffe, bevorzugt die Fraktionen $C_8$ bis $C_{12}$, wie z.B. Xylolgemische oder substituierte Naphthaline, Phthalsäureester wie Dibutyl- oder Dioctylphthalat, aliphatische Kohlenwasserstoffe wie Cyclohexan oder Paraffine, Alkohole und Glykole sowie deren Aether und Ester, wie Aethanol, Aethylenglykol, Aethylenglykolmonomethyl- oder -äthyläther, Ketone wie Cyclohexanon, stark polare Lösungsmittel wie N-Methyl-2-pyrrolidon, Dimethylsulfoxid odcr Dimethylformamid, sowie gegebenenfalls epoxidierte Pflanzenöle wie epoxidiertes Kokosnussöl oder Sojaöl; oder Wasser.

Als feste Trägerstoffe, z.B. für Stäubemittel und dispergierbare Pulver, werden in der Regel natürliche Gesteinsmehle verwendet, wie Calcit, Talkum, Kaolin, Montmorillonit oder Attapulgit. Zur verbesserung der

physikalischen Eigenschaften können auch hochdisperse Kieselsäure oder hochdisperse saugfähige Polymerisate zugesetzt werden. Als gekörnte, adsorptive Granulatträger kommen poröse Typen wie z.B. Bimsstein, Ziegelbruch, Sepiolit oder Bentonit, als nicht sorptive Trägermaterialien z.B. Calcit oder Sand in Frage. Darüberhinaus kann eine Vielzahl von vorgranulierten Materialien anorganischer oder organischer Natur wie insbesondere Dolomit oder zerkleinerte Pflanzenrückstände verwendet werden.

Als oberflächenaktive Verbindungen kommen je nach der Art des zu formulierenden Wirkstoffes der Formel I nichtionogene, kation- und/oder anionaktive Tenside mit guten Emulgier-, Dispergier- und Netzeigenschaften in Betracht. Unter Tensiden sind auch Tensidgemische zu verstehen.

Geeignete anionische Tenside können sowohl sog. wasserlösliche Seifen als auch wasserlösliche synthetische oberflächenaktive Verbindungen sein.

Als Seifen seien die Alkali-, Erdalkali- oder gegebenenfalls substituierte Ammoniumsalze von höheren Fettsäuren ($C_{10}$-$C_{22}$), wie z.B. die Na- oder K-Salze der Oel- oder Stearinsäure, oder von natürlichen Fettsäuregemischen, die z.B. aus Kokosnuss- oder Talgöl gewonnen werden können, genannt. Ferner sind auch die Fettsäure-methyl-taurinsalze zu erwähnen.

Häufiger werden jedoch sogenannte synthetische Tenside verwendet, insbesondere Fettsulfonate, Fettsulfate, sulfonierte Benzimidazolderivate oder Alkylarylsulfonate.

Die Fettsulfonate oder -sulfate liegen in der Regel als Alkali-, Erdalkali- oder gegebenenfalls substitierte Ammoniumsalze vor und weisen cinen Alkylrest mit 8 bis 22 C-Atomen auf, wobei Alkyl auch den Alkylteil von Acylresten einschliesst, z.B. das Na- oder Ca-Salz der Ligninsulfonsäure, des Dodecylschwefelsäureesters oder eines aus natürlichen Fettsäuren hergestellten Fettalkoholsulfatgemisches. Hierher gehören auch die Salze der Schwefelsäureester und Sulfonsäuren von Fettalkohol-Aethylenoxyid-Addukten. Die sulfonierten Benzimidazolderivate enthalten vorzugsweise 2 Sulfonsäuregruppen und einen Fettsäurerest mit 8-22 C-Atomen. Alkylarylsulfonate sind z.B. die Na-, Caoder Triäthanolaminsalze der Dodecylbenzolsulfonsäuren, der Dibutylnaphthalinsulfonsäure, oder eines Naphthalinsulfonsäure-Formaldehydkondensationsproduktes.

Ferner kommen auch entsprechende Phosphate wie z.B. Salze des Phosphorsäureesters eine p-Nonylphenol-(4-14)-Aethylenoxid-Adduktes oder Phospholipide in Frage.

Als nicht ionische Tenside kommen in erster Linie Polyglykolätherderivate von aliphatischen oder cycloaliphatischen Alkoholen, gesättigten oder ungesättigten Fettsäuren und Alkylphenolen in Frage, die 3 bis 30 Glykoläthergruppen und 8 bis 20 Kohlenstoffatome im (aliphatischen) Kohlenwasserstoffrest und 6 bis 18 Kohlenstoffatome im Alkylrest der Alkylphenole enthalten können.

Weitere geeignete nichtionische Tenside sind die wasserlöslichen, 20 bis 250 Aethylenglykoläthergruppen und 10 bis 100 Propylenglykoläthergruppen enthaltenden Polyäthylenoxidaddukte an Polypropylenglykol, Aethylendiaminopolypropylenglykol und Alkylpolypropylenglykol mit 1 bis 10 Kohlenstoffatomen in der Alkylkette. Die genannten Verbindungen enthalten üblicherweise pro Propylenglykol- Einheit 1 bis 5 Aethylenglykoleinheiten.

Als Beispiele nichtionischer Tenside seien Nonylphenolpolyäthoxyäthanole, Ricinusölpolyglykoläther, Polypropylen-Polyäthylenoxidaddukte, Tributylphcnoxypolyäthoxyäthanol, Polyäthylenglykol und Octylphenoxypolyäthoxyäthanol erwähnt.

Ferner kommen auch Fettsäureester von Polyoxyäthylcnsorbitan wie das Polyoxyäthylensorbitan-trioleat in Betracht.

Bei den kationischen Tensiden handelt es sich vor allem um quartäre Ammoniumsalze, welche als N-Substitutenten mindestens einen Alkylrest mit 8 bis 22 C-Atomen enthalten und als weitere Substituenten niedrige, gegebenenfalls halogenierte Alkyl-, Benzyl- oder niedrige Hydroxyalkylreste aufweisen. Die Salze liegen vorzugsweise als Halogenide, Methylsulfate oder Aethylsulfate vor, z.B. das Stearyltrimethylammoniumchlorid oder das Benzyldi(2-chloräthyl)äthylammoniumbromid.

Die in der Formulierungstechnik gebräuchlichen Tenside sind u.a. in folgenden Publikationen beschrieben: "Mc Cutcheon's Detergents and Emulsifiers Annual" MC Publishing Corp., Ridgewood, New Jersey, 1979. Sisley and Wood, "Encyclopedia of Surface Active Agents", Chemical Publishing Co., Inc. New York, 1964.

Die pestiziden Zubereitungen enthalten in der Regel 0,1 bis 99 %, insbesondere 0,1 bis 95 %, Wirkstoff der Formel I, 1 bis 99 % eines festen oder flüssigen Zusatzstoffes und 0 bis 25 %, insbesondere 0,1 bis 25 % eines Tensides.

Während als Handelsware eher konzentrierte Mittel bevorzugt werden, verwendet der Endverbraucher in der Regel verdünnte Mittel. Die Anwendungsformen können bis hinab zu 0,001 % an Wirkstoff verdünnt werden. Die Aufwandmengen betragen in der Regel 0,1 bis 10 kg AS/ha, vorzugsweise 0,25 bis 5 kg AS/ha.

Die Mittel können auch weitere Zusätze wie Stabilisatoren, Entschäumer, Viskositätsregulatoren, Bindemittel, Haftmittel sowie Dünger oder andere Wirkstoffe zur Erzielung spezieller Effekte enthalten.

Die folgenden Beispiele dienen der näheren Erläuterung der vorliegenden Erfindung.

**Herstellungsbeispiele**

**Beispiel 1:** N-[2-Nitro-5-(2-chlor-4-trifluormethylphenoxy)-phenyl]-P-äthyl-aminomethylphosphinsäureäthylester (Verbindung Nr. 1).

Eine Lösung von 24,1 g (0,066 mol) 3',4'-Dinitro-2-chlor-4-trifluor-methyl-diphenyläther in 120 ml Toluol wird zum Rückfluss erhitzt und tropfenweise mit 20,0 g (0,132 mol) P-Aethylaminomethylphosphinsäureäthylester versetzt. Dabei entstehen nitrose Gase. Die Lösung wird für weitere 18 Stunden zum Rückfluss erhitzt. Durch Eindampfen und Chromatographieren des Rückstandes mit Aethylacetat an Kieselgel erhält man 16,0 g (51,9%) N-[2-Nitro-5-(2-chlor-4-trifluormethyl-phenoxy)-phenyl-P-äthyl-aminomethylphosphinsäureäthylester als gelbes Oel.

**Analyse** $C_{18}H_{19}ClF_3N_2O_5P$ (466,78):

Berechnet: C 46,32 % H 4,10 % N 6,00 % P 6,63 %
Gefunden: C 45,66 % H 4,32 % N 6,29 % P 6,71 %.

**Beispiele 2:** N-[2-Nitro-5-(2-chlor-4-trifluormethylphenoxy)-pheny1]-P-methyl-aminomethylphosphinsäureäthylester (Verbindung Nr. 2).

Eine Lösung von 19,8 g (0,055 mol) 3',4'-Dinitro-2-chlor-4-trifluor-methyl-diphenyläther in 100 ml Toluol wird zum Rückfluss erhitzt und tropfenweise mit 15,0 g (0,1094 mol) P-Methyl-aminomethylphosphinsäureäthylester versetzt, wobei sich nitrose Gase entwickeln. Die Lösung wird für weitere 30 Stunden am Rückfluss gekocht. Durch Eindampfen der Lösung und Chromatographieren des Rückstandes mit Aethylacetat an Kieselgel erhält man 19,07 g (76,6%) N-[2-Nitro-5-(2-chlor-4-trifluor-methylphenoxy)-pheny1]-P-methyl-aminomethylphosphinsäureäthylester, Smp. 118,5-119,5°C.

**Analyse** $C_{17}H_{17}ClF_3N_2O_5P$ (452,75):

Berechnet: C 45,10 % H 3,78 % N 6,19 % P 6,84 %
Gefunden: C 44,94 % H 3,89 % N 6,34 % P 6,79 %.

**Beispiel 3:** N-[2-Nitro-5-(2-chlor-4-trifluormethylphenoxy)-phenyl]-P-methyl-aminomethylphosphinsäure (Verbindung Nr. 3).

8,0 g (0,017 mol) N-[2-Nitro-5-(2-chlor-4-trifluormethylphenoxy)-phenyl]-P-methyl-aminomethylphosphinsäureäthylester werden in 50,0 ml 20%iger Salzsäure für 14 Stunden am Rückfluss gekocht. Das ausgefallene kristalline Produkt wird abgetrennt und bei 80°C im Vakuum getrocknet. Man erhält so 7,0 g (96,8%) N-[2-Nitro-5-(2-chlor-4-tri-fluormethylphenoxy) -phenyl]-P -methyl-aminomethylphosphinsäure, Smp. 153-154,5°C.

**Analyse** $C_{15}H_{13}ClF_3N_2O_5P$ (427,58):

Berechnet: C 42,13 % H 3,16 % N 6,55 % P 7,24 %
Gefunden: C 42,11 % H 3,23 % N 6,66 % P 7,22 %.

**Beispiel 4:** N-[2-Nitro-5-(2-chlor-4-trifluormethylphenoxy)-phenyl]-N-methyl-aminoäthylphosphonigsäureäthylester (Verbindung Nr. 4).

Zu einer Lösung von 17,99 g (0,0496 mol) 3',4'-Dinitro-2-chlor-4-trifluormethyl-diphenyläther in 70 ml Toluol lässt man unter Rühren 15,0 g (0,0992 mol) N-Methyl-aminoäthylphosphonigsäureäthylester zutropfen und erhitzt die Mischung für 12 Stundenzum Rückfluss. Nach dem Abkühlen filtriert man die Mischung und dampft das Filtrat ein. Der Rückstand wird zur Reinigung an Kieselgel mit Hexan-Aethylacetat-Gemisch chromatographiert, eingedampft, mit Chloroform aufgenommen, mit Wasser gewaschen, getrocknet und erneut eingedampft. Man erhält so 7,4 g (34,2% d.Th.) N-[2-Nitro-5-(2-chlor-4-trifluormethyl-phenoxy)-phenyl]-N-methyl-aminoäthylphosphonigsäureäthylester als gelbes viskoses Oel.

**Analyse** $C_{18}H_{19}ClF_3N_2O_5P$ (466,78):

Berechnet: C 46,32% H 4,10% N 6,00% P 6,63%
gefunden: C 44,8% H 4,1% N 6,9% P 6,5%.

**$^1$H-MR** ($CDCl_3$): $\delta$ = 1,33 (t; 3H; $CH_3$); 2,20 (2t; 2H; $CH_2P$); 2,87 (s; 3H; N-$CH_3$); 3,50 (2t; 2H; $NCH_2$); 4,1 (Quint.; 2H; $OCH_2$); 6,3-8,0 (m; 6H); 7,3 (d, $J_{PH}$ = 548 Hz; 1H) ppm.

**Beispiel 5:** N-[2-Nitro-5-(2-chlor-4-trifluormethylphenoxy)-phenyl]-N-methyl-aminoäthylphosphonigsäure (Verbindung Nr. 5).

Eine Mischung aus 3,2 g N-[2-Nitro-5-(2-chlor-4-trifluormethylphenoxy)-phenyl]-N-methyl-aminoäthylphosphonigsäureäthylester und 10 g Trimethylbromsilan wird für 18 Stunden bei 20° C gerührt. Nach dem Abdampfen des überschüssigen Trimethylbromsilans wird der Rückstand mit Aethanol aufgenommen und erneut eingedampft. Man erhält ein gelbes Oel, das aus Aether kristallisiert, Ausbeute: 2,14 g (71,3% d.Th.) N-[2-Nitro-5-(2-chlor-4-tri-fluormethylphenoxy)-phenyl]-N-methyl-aminoäthylphosphonigsäure, Smp. 161-164° C.

In analoger Weise erhält man die in der anschliessenden Tabelle aufgeführten Verbindungen.

| Vag.No | Chemische Bereichnung | Physikal. Daten |
|---|---|---|
| 6 | N-[Nitro-5-(2-chlor-4-trifluormethylphenoxy)-phenyl]-P-Äthyl-aminomethylphosphinsäure | Smp.122-124° C |
| 7 | N-[2-Nitro-5-(2-chlor-4-trifluormethylphenoxy)-phenyl]-2-amino-äthylphosphorigsäureäthylester | |
| 8 | N-[2-Nitro-5-(2-chlor-4-trifluormethylphenoxy)-phenyl]-2-aminoäthylphosphonigsäure | |
| 9 | N-[2-Nitro-5-(2-chlor-4-trifluormethylphenoxy)-phenyl]-N-tert.butyl-2-aminoäthylphosphonigsäureäthylester | |
| 10 | N-[2-Nitro-5-(2-chlor-4-trifluormethylphenoxy)-phenyl]-N-n-butyl-2-aminoäthylphosphonig-säreäthylester | |
| 11 | N-[2-Nitro-5-(2-chlor-4-trifluormethylphenoxy)-phenyl]-P-methyl-2-aminoäthylphosphinosäure | |
| 12 | N-[2-Nitro-5-(2-chlor-4-trifluormethylphenoxy)-phenyl]-P-methyl-2-aminoäthylphosphinsäure-methylester | |
| 13 | N-[2-Nitro-5-(2-chlor-4-trifluormethylphenoxy)-phenyl]-P-methyl-2-aminoäthylphosphinsäure-äthylester | |
| 14 | N-[2-Nitro-5-(5-trifluormethylpyrid-2-yloxy)- phenyl]-P-methyl-2-aminoäthylphosphinsäureäthylester | Smp 88-90° C |

**Formulierungsbeispiele**

**Beispiel 6:**

**Formulierungsbeispiele für flüssige Wirkstoffe der Formel I (% = Gewichtsprozent)**

| a) Emulsionskonzentrate | a) | b) | c) |
|---|---|---|---|
| Wirkstoff | 20% | 40% | 50% |
| Ca-Dodecylbenzolsulfonat | 5% | 8% | 5,8% |
| Ricinusöl-polyäthylenglykoläther (36 Mol AeO) | 5% | - | - |
| Tributylphenoyl-polyäthylenglykoläther (30 Mol AeO) | - | 12% | 4,2% |
| Cyclohexanon | - | 15% | 20% |
| Xylolgemisch | 70% | 25% | 20% |

Aus solchen Konzentraten können durch Verdünnen mit Wasser Emulsionen jeder gewünschten Konzentration hergestellt werden.

| b) Lösungen | a) | b) | c) | d) |
|---|---|---|---|---|
| Wirkstoff | 80% | 10% | 5% | 95% |
| Aethylenglykol-monomethyläther | 20% | - | - | - |
| Polyäthylenglykol MG 400 | - | 70% | - | - |
| N-Methyl-2-pyrrolidon | - | 20% | - | - |
| Epoxidiertes Kokosnussöl | - | - | 94% | - |

Die Lösungen sind zur Anwendung in Form kleinster Tropfen geeignet.-

| c) Granulate | a) | b) |
|---|---|---|
| Wirkstoff | 5% | 10% |
| Kaolin | 94% | - |
| Hochdisperse Kieselsäure | 1% | - |
| Attapulgit | - | 90% |

Der Wirkstoff wird in Methylenchlorid gclöst, auf den Träger aufgesprüht und das Lösungsmittel anschliessend im Vakuum abgedampft.

| d) Stäubemittel | a) | b) |
|---|---|---|
| Wirkstoff | 2% | 5% |
| Hochdisperse Kieselsäure | 1% | 5% |
| Talkum | 97% | - |
| Kaolin | - | 90% |

Durch inniges Vermischen der Trägerstoffe mit dem Wirkstoff erhältman gebrauchsfertiges Stäubemittel.

**Beispiel 7:**

**Formulierungsbeispiele für feste Wirkstoffe der Formel I (% = Gewichtsprozent)**

| a) Spritzpulver | a) | b) |
|---|---|---|
| Wirkstoff | 20% | 60% |
| Na-Ligninsulfonat | 5% | 5% |
| Na-Laurylsulfat | - | 6% |
| Octylphenolpolyäthylenglykoläther (7-8 Mol AeO) | - | 2% |
| Hochdisperse Kieselsäure | 5% | 27% |
| Kaolin | 67% | - |

Der Wirkstoff wird mit den Zusatzstoffen gut vermischt und in einergeeigneten Mühle gut vermahlen. Man erhält Spritzpulver, die sich mit Wasser zur Suspension jeder gewünschten Konzentration verdünnen lassen.

| b) Emulsions-Konzentrat | |
|---|---|
| Wirkstoff | 10% |
| Octylphenolpolyäthylenglykoläther (4-5 Mol AeO) | 3% |
| Ca-Dodecylbenzolsulfonat | 3% |
| Ricinusölpolyglykoläther (36 Mol AeO) | 4% |
| Cyclohexanon | 30% |
| Xylolgemisch | 50% |

Aus diesem Konzentrat können durch Verdünnen mit Wasser Emulsionen jeder gewünschten Konzentration hergestellt werden.

| c) Stäubemittel | a) | b) |
|---|---|---|
| Wirkstoff | 5% | 8% |
| Talkum | 95% | - |
| Kaolin | - | 92% |

Man erhält anwendungsfertige Stäubemittel, indem der Wirkstoff mitdem Träger vermischt und auf einer geeigneten Mühle vermahlen wird.

d) Extruder Granulat

| | |
|---|---|
| Wirkstoff | 10% |
| Na-Ligninsulfonat | 2% |
| Carboxymethylcellulose | 1% |
| Kaolin | 87% |

Der Wirkstoff wird mit den Zusatzstoffen vermischt, vermahlen und mit Wasser angefeuchtet. Dieses Gemisch wird extrudiert und anschliessend im Luftstrom getrocknet.

e) Umhüllungs-Granulat

| | |
|---|---|
| Wirkstoff | 3% |
| Polyäthylenglykol (MG 200) | 3% |
| Kaolin | 94% |

Der fein gemahlene Wirkstoff wird in einem Mischer auf das mit Polyäthylenglykol angefeuchtete Kaolin gleichmässig aufgetragen. Auf diese Weise erhält man staubfreie Umhüllungs-Granulate.

f) Suspensions-Konzentrat

| | |
|---|---|
| Wirkstoff | 40% |
| Aethylenglykol | 10% |
| Nonylphenolpolyäthylenglykoläther (15 Mol AeO) | 6% |
| Na-Ligninsulfonat | 10% |
| Carboxymethylcellulose | 1% |
| 37%ige wässrige Formaldehyd-Lösung | 0,2% |
| Silikonöl in Form einer 75%igen wässrigen Emulsion | 0,8% |
| Wasser | 32% |

Der fein gemahlene Wirkstoff wird mit den Zusatzstoffen innig vermischt. Man erhält so ein Suspensions-Konzentrat, aus welchem durch Verdünnen mit Wasser Suspensions-Konzentrat, aus welchem durch Verdünnen mit Wasser Suspensionen jeder gewünschten Konzentration hergestellt werden können.

## Biologische Beispiele

### Beispiel 8:Nachweis der Herbizidwirkung vor dem Auflaufen der Pflanzen

Im Gewächshaus werden Pflanzensamen in Blumentöpfe von 12-15 cm Durchmesser gesät. Unmittelbar danach wird die Erdoberfläche mit einer wässrigen Dispersion oder Lösung der Wirkstoffe behandelt. Es werden Konzentrationen von 4 kg Wirkstoffmengen pro Hektar angewendet. Die Töpfe werden dann im Gewächshaus bei einer Temperatur von 22-25°C und 50-70 % relativer Luftfeuchtigkeit gehalten. Nach 3 Wochen wird der Versuch ausgewertet und die Wirkung auf die Versuchspflanzen nach dem folgenden Massstab bewertet:

1: Pflanze nicht gekeimt oder total abgestorben
2-3: sehr starke Wirkung
4-6: mittlere Wirkung
7-8: schwache Wirkung
9: keine Wirkung (wie unbehandelte Kontrolle).

**Pre-emergente Wirkung**

Aufwandmenge: 4 kg Wirksubstanz/Hektar

| Verb.Nr. | Avena | Setaria | Sinapis | Stellaria |
|---|---|---|---|---|
| 2 | 4 | 1 | 1 | 1 |
| 3 | 2 | 1 | 1 | 1 |
| 1 | 6 | 1 | 1 | 1 |
| 6 | 7 | 2 | 1 | 4 |

**Beispiel 9: Nachweis der Herbizidwirkung nach dem Auflaufen der Pflanzen (Kontaktwirkung)**

Eine Anzahl Unkräuter und Kulturpflanzen, sowohl monokotyle wie dikotyle, wurden nach dem Auflsufen, im 4- bis 6-Blattstadium mit einer wassrigen Wirkstoffdispersion in Dosierungen von 4 kg AS/ha gespritzt und dann bei 24° bis 26°C und 45-60 % relativer Luftfeuchtigkeit gehalten. 15 Tage nach der Behandlung wird der Versuch ausgewertet und nach dem gleichen Massstab wie im pre-emergenten Versuch bewertet.

**Post-emergente Wirkung**

Aufwandmenge: 4 kg Wirksubstanz/Hektar

| Verb. Nr. | Avena | Setaria | Lolium | Solanum | Sinapis | Stellaria | Phaseolus |
|---|---|---|---|---|---|---|---|
| 2 | 1 | 1 | 4 | 1 | 1 | 1 | 4 |
| 3 | 4 | 1 | 5 | 1 | 1 | 1 | 2 |
| 1 | 3 | 1 | 4 | 1 | 1 | 1 | 2 |
| 6 | 4 | 3 | 6 | 1 | 1 | 1 | 2 |

**Beispiel 17: Nachweis der Selektivität bei Nachauflaufanwendung**

In der gleichen Versuchsanordnung wie im Beispiell6 werden eine grössere Anzahl von Pflanzen mit verschiedenen Aufwandmengen an Wirksubstanz behandelt. Die Auswertung erfolgte nach dem in Beispiel 14 angegebenen Massstab.

**Post-emergente Wirkung**

| Wirkung | Verb. | Nr. 2 |
|---|---|---|
| Aufwandmenge kg AS/ha | 1 | 0,5 |
| Testpflanze | | |
| Weizen | 6 | 7 |
| Mais | 4 | 6 |
| Reis trocken | 9 | 9 |
| Avena fatua | 2 | 4 |
| Alopecurus myos. | 4 | 4 |
| Echinochloa c.g. | 2 | 3 |
| Soja | 7 | 8 |
| Abutilon | 1 | 1 |
| Xanthium Sp. | 2 | 2 |
| Chenopodium Sp. | 2 | 2 |
| Sinapis | 2 | 2 |
| Galium aparine | 2 | 3 |
| Viola tricolor | 1 | 1 |

**Patentansprüche** für die Vertragsstaaten BE CH DE FR GB IT LI NL

1. (2-Nitro-5-phenoxy-bzw.-5-pyridoxy-phenylamino)-alkylphosphin- und -phosphonige Säurederivate der allgemeinen Formel I

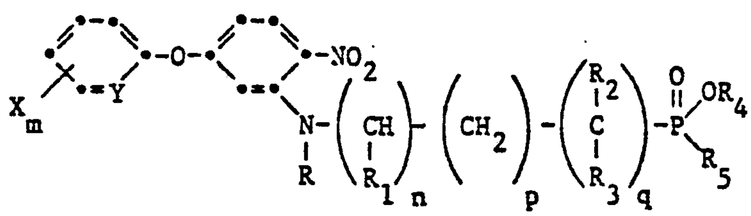

worin
X Halogen, $CF_3$, $NO_2$, CN, $CONH_2$ oder $CSNH_2$,
Y Stickstoff oder -CH=,
R Wasserstoff, $C_1$-$C_4$-Alkyl oder Aralkyl mit 1-4 Kohlenstoffatomen im Alkylteil,
$R_1$ $C_1$-$C_4$-Alkyl,
$R_2$ $C_1$-$C_4$-Alkyl, Phenyl oder -$PO(OR_6)_2$,
$R_3$ Wasserstoff oder $C_1$-$C_4$-Alkyl,
$R_4$ Wasserstoff, $C_1$-$C_4$-Alkyl oder ein Kation,
$R_5$ Wasserstoff oder $C_1$-$C_4$-Alkyl,
$R_6$ Wasserstoff oder $C_1$-$C_4$-Alkyl,
m eine Zahl von Null bis drei,
n Null oder eins,
p eine Zahl von Null bis drei und
q Null oder eins bedeuten, wobei
$R_1$ und $R_3$ zusammen auch für eine gegebenenfalls substituierte $C_1$-$C_3$-Alkylenkette stehen können, und wobei mindestens eins der Symbole n, p und q eine von Null verschiedene Zahl bedeutet.

2. Verbindungen gemäss Anspruch 1, dadurch gekennzeichnet, dass m die Zahl zwei bedeutet.

3. Verbindungen gemäss Anspruch 1, dadurch gekennzeichnet, dass X Trifluormethyl oder Chlor bedeutet.

4. Verbindungen gemäss Anspruch 1, dadurch gekennzeichnet, dass R für Wasserstoff steht.

5. Verbindungen gemäss Anspruch 1, dadurch gekennzeichnet, dass die Zahlen n, p und q zusammen als Summe höchstens die Zahl drei ergeben.

6. Verbindungen gemäss Anspruch 1, dadurch gekennzeichnet, dass $R_4$ Wasserstoff oder $C_1$-$C_3$-Alkyl bedeutet.

7. Verbindungen gemäss Anspruch 1, dadurch gekennzeichnet, dass $R_5$ Methyl oder Aethyl bedeutet.

8. Verbindungen gemäss Anspruch 1, dadurch gekennzeichnet, dass Y die -CH= Cruppe und m die Zahl zwei bedeuten und die beiden Reste X für Chlor in 2-Stellung und Trifluormethyl in 4-Stellung stehen, R Wasserstoff, $R_4$ Wasserstoff oder $C_1$-$C_3$-Alkyl und $R_5$ Wasserstoff, Methyl oder Aethyl bedeuten und die Zahlen n, p und q zusammen als Summe höchstens die Zahl drei ergeben.

9. Verbindungen gemäss Anspruch 1, dadurch gekennzeichnet, dass Y Stickstoff bedeutet, m die Zahl eins und X Trifluormethyl in 5-Stellung bedeuten, R für Wasserstoff, $R_4$ für Wasserstoff oder $C_1$-$C_3$-Alkyl und $R_5$ für Wasserstoff, Methyl oder Aethyl stehen und die Zahlen n, p und q zusammen als Summe höchstens die Zahl drei ergeben.

10. Verbindungen gemäss Anspruch 1, dadurch gekennzeichnet, dass sie der allgemeinen Formel Ia

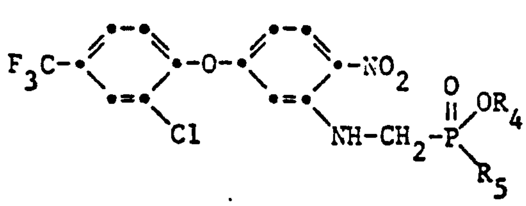

worin $R_4$ Wasserstoff, Methyl oder Aethyl und $R_5$ Methyl oder Aethyl bedeuten, Entsprechen.

11. Verbindungen gemäss Anspruch 1 dadurch gekennzeichnet, dass sie der allgemeinen Formel Ib

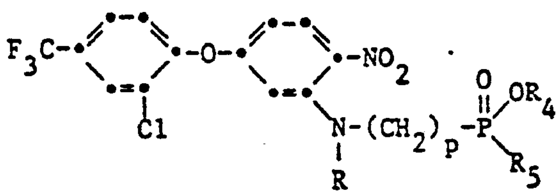

worin R Wasserestoff, Methyl oder Benzyl, $R_4$ Wasserstoff, Aethyl oder i-Propyl, $R_5$ Wasserstoff und p eine Zahl von 1 bis 3 bedeuten, entsprechen.

12. Verbindungen gemäss Anspruch 1, dadurch gekennzeichnet, dass sie der allgemeinen Formel Ic

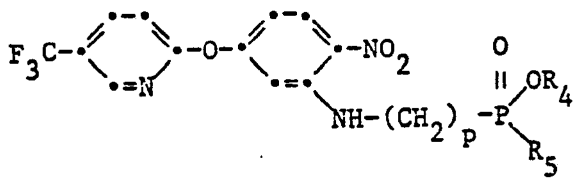

worin $R_4$ Wasserstoff, Aethyl oder i-Propyl, $R_5$ Methyl und p eine Zahl von 1 bis 3 bedeuten, entsprechen.

13. N-[2-Nitro-5-(2-chlor-4-trifluormethylphenoxy) -phenyl]-P-äthyl-aminomethylphosphinsäureäthylester gemäss Anspruch 1.

14. Verfahren zur Herstellung der Verbindungen der Formel I, dadurch gekennzeichnet, dass man einen Dinitrophenylaryläther der Formel II

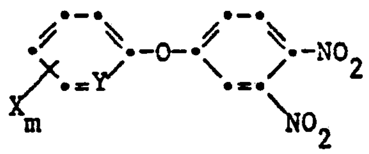

worin X, Y und m die unter Formel I gegebene Bedeutung haben, mit einem Aminoalkylphosphin- oder phosphonig säurederivat der Formel III

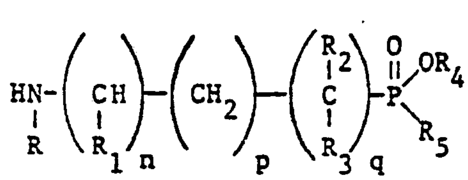

worin R, $R_1$, $R_2$, $R_3$, n, p und q die unter Formel I gegebene Bedeutung haben, und $R_4$ für $C_1$-$C_4$-Alkyl und $R_5$ für Wasserstoff oder$C_1$-$C_4$-Alkyl, stehen, umsetzt und gegebenenfalls durch Hydrolyse in die freie Säure und durch weitere Umsetzung mit einer Base in ein Salz überführt.

15. Herbizides und pflanzenwuchsregulierendes Mittel, dadurch gekennzeichnet, dass es als aktive Komponente mindestens eine Verbindung der Formel I nach Anspruch 1 enthält.

16. Verfahren zur Bekämpfung von unerwünschtem Pflanzenwuchs oder zur Regulierung des Pflanzenwuchses, dadurch gekennzeichnet, dass man eine Verbindung der Formel I nach Anspruch 1 oder ein Mittel welches eine Verbindung der Formel I enthält, auf Pflanzen, deren Standorte oder Pflanzenteile appliziert

17. Verfahren nach Anspruch 16 zur Bekämpfung von Unkräutern in Reis.

**Patentansprüche** für den Vertragsstaat AT

1. Herbizides und pflanzenwuchsregulierendes Mittel, dadurch gekennzeichnet, dass es als aktive Komponente mindestens ein (2-Nitro-5-phenoxy-bzw.-5-pyridoxy-phenylamino)-alkylphosphin- und -phosphonige Säurederivat der allgemeinen Formel I

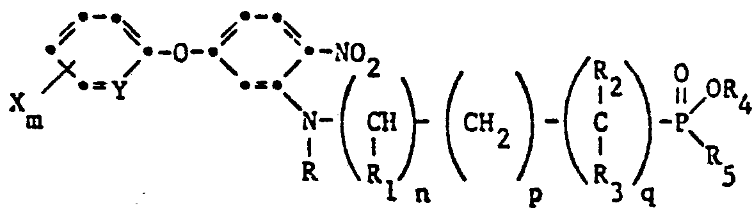

enthält, worin
X Halogen, $CF_3$, $NO_2$, CN, $CONH_2$ oder $CSNH_2$,
Y Stickstoff oder -CH=,
R Wasserstoff, $C_1$-$C_4$-Alkyl oder Aralkyl mit 1-4 Kohlenstoffatomen im Alkylteil,
$R_1$ $C_1$-$C_4$-Alkyl,
$R_2$ $C_1$-$C_4$-Alkyl, Phenyl oder $-PO(OR_6)_2$,
$R_3$ Wasserstoff oder $C_1$-$C_4$-Alkyl,
$R_4$ Wasserstoff, $C_1$-$C_4$-Alkyl oder ein Kation,
$R_5$ Wasserstoff oder $C_1$-$C_4$-Alkyl,
$R_6$ Wasserstoff oder $C_1$-$C_4$-Alkyl,
m eine Zahl von Null bis drei,
n Null oder eins,
p eine Zahl von Null bis drei und
q Null oder eins bedeuten, wobei
$R_1$ und $R_3$ zusammen auch für eine gegebenenfalls substituierte $C_1$-$C_3$-Alkylenkette stehen können, und wobei mindestens eins der Symbole n, p und q eine von Null verschiedene Zahl bedeutet.

2. Mittel gemäss Anspruch 1, dadurch gekennzeichnet, dass m die Zahl zwei bedeutet.

3. Mittel gemäss Anspruch 1, dadurch gekennzeichnet, dass X Trifluormethyl oder Chlor bedeutet.

4. Mittel gemäss Anspruch 1, dadurch gekennzeichnet, dass R für Wasserstoff steht.

5. Mittel gemäss Anspruch 1, dadurch gekennzeichnet, dass die Zahlen n, p und q zusammen als Summe höchstens die Zahl drei ergeben.

6. Mittel gemäss Anspruch 1, dadurch gekennzeichnet, dass $R_4$ Wasserstoff oder $C_1$-$C_3$-Alkyl bedeutet.

7. Mittel gemäss Anspruch 1, dadurch gekennzeichnet, dass $R_5$ Methyl oder Aethyl bedeutet.

8. Mittel gemäss Anspruch 1, dadurch gekennzeichnet, dass Y die -CH= Gruppe und m die Zahl zwei bedeuten und die beiden Reste X für Chlor in 2-Stellung und Trifluormethyl in 4-Stellung stehen, R Wasserstoff, $R_4$ Wasserstoff oder $C_1$-$C_3$-Alkyl und $R_5$ Wasserstoff, Methyl oder ethyl Aethyl bedeuten und die Zahlen n, p und q zusammen als Summe höchstens die Zahl drei ergeben.

9. Mittel gemäss Anspruch 1, dadurch gekennzeichnet, dass Y Stickstoff bedeutet, der, m die Zahl eins und X Trifluormethyl in 5-Stellung bedeuten, R für Wasserstoff, $R_4$ für Wasserstoff oder $C_1$-$C_3$-Alkyl und $R_5$ für Wasserstoff, Methyl oder Aethyl stehen und die Zahlen n, p und q zusammen als Summe höchstens die Zahl drei ergeben.

10. Mittel gemäss Anspruch 1, dadurch gekennzeichnet, dass der Wirkstoff der allgemeinen Formel Ia

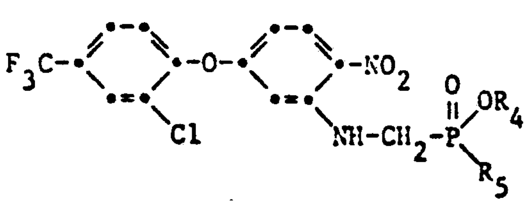

worin $R_4$ Wasserstoff, Methyl oder Aethyl und $R_5$ Methyl oder Aethyl bedeuten, entspricht.

11. Mittel gemäss Anspruch 1, dadurch gekennzeichnet, dass der Wirkstoff der allgemeinen Formel Ib

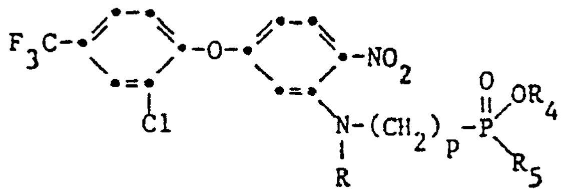

worin R Wasserstoff, Methyl oder Benzyl, $R_4$ Wasserstoff, Aethyl oder i-Propyl, $R_5$ Wasserstoff und p eine Zahl von 1 bis 3 bedeuten, entspricht.

Mittel gemäss Anspruch 1, dadurch gekennzeichnet, dass der Wirkstoff der allgemeinen Formel IC

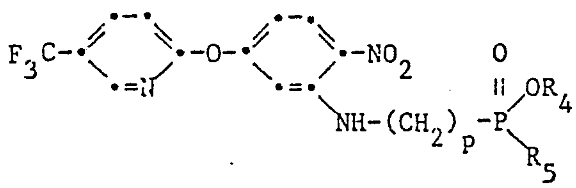

worin $R_4$ Wasserstoff, Aethyl oder i-Propyl, $R_5$ Methyl und p eine Zahl von 1 bis 3 bedeuten, entspricht.

13. Mittel gemäss Anspruch 1, dadurch gekennzeichnet, dass es als Wirkstoff N-[2-Nitro-5-(2-chlor-4-trifluormethylphenoxy)-phenyl]-Päthyl-aminomethylphosphinsäureäthylester enthält.

14. Verfahren zur Herstellung der Verbindungen der Formel I, dadurch gekennzeichnet, dass man einen Dinitrophenylaryläther der Formel II

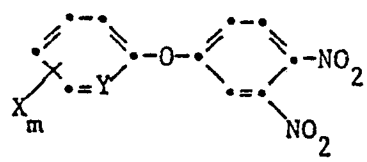

worin X, Y und m die unter Formel I gegebene Bedeutung haben, mit einem Aminoalkylphosphin- oder phosphonig Säurederivat der Formel III

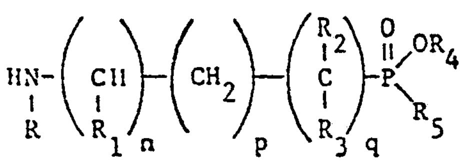

worin R, $R_1$, $R_2$, $R_3$, n, p und q die unter Formel I gegebene Bedeutung haben, und $R_4$ fur $C_1$-$C_4$-Alkyl und $R_5$ für Wasserstoff oder $C_1$-$C_4$-Alkyl stehen, umsetzt und gegebenenfalls durch Hydrolyse in die freie Säure und durch weitere Umsetzung mit einer Base in ein Salz überführt.

15. Verfahren zur Bekämpfung von unerwünschtem Pflanzenwuchs oder zur Regulierung des Pflanzenwuchses, dadurch gekennzeichnet, dass man eine Verbindung der Formel I nach Anspruch 1 oder ein Mittel, welches eine Verbindung der Formel I enthält, auf Pflanzen, deren Standorte oder Pflanzenteile appliziert.

16. Verfahren nach Anspruch 15 zur Bekämpfung von Unkräutern in Reis.

**Claims** for the Contracting States: BE, DE, FR, GB, IT, NL, CH, LI

1. A (2-nitro-5-phenoxyphenylamino)alkylphosphinic, (2-nitro-5-phenoxyphenylamino)alkylphosphonous, (2-nitro-5-pyridoxy-phenylamino)alkylphosphinic or (2-nitro-5-pyridoxyphenylamino)-alkylphosphonous acid derivative of the general formula I

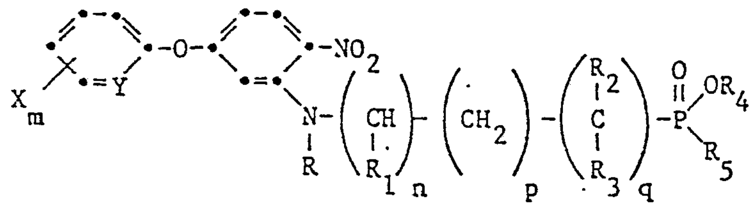

wherein
X is halogen, $CF_3$, $NO_2$, CN, $CONH_2$ or $CSNH_2$,
Y is nitrogen or -CH=,
R is hydrogen, $C_1$-$C_4$alkyl or aralkyl containing 1 to 4 carbon atoms in the alkyl moiety,
$R_1$ is $C_1$-$C_4$alkyl,
$R_2$ is $C_1$-$C_4$alkyl, phenyl or $-PO(OR_6)_2$,
$R_3$ is hydrogen or $C_1$-$C_4$alkyl,
$R_4$ is hydrogen, $C_1$-$C_4$alkyl or a cation,
$R_5$ is hydrogen or $C_1$-$C_4$alkyl,
$R_6$ is hydrogen or $C_1$-$C_4$alkyl,
m is a value from 0 to 3,
n is 0 or 1,
p is a value from 0 to 3 and
q is 0 or 1,
with the proviso that $R_1$ and $R_3$ taken together may also be an unsubstituted or substituted $C_1$-$C_3$alkylene chain and that at least one of the symbols n, p and q is a value different from O.

2. A compound according to claim 1, wherein m is 2.

3. A compound according to claim 1, wherein X is trifluoromethyl or chlorine.

4. A compound according to claim 1, wherein R is hydrogen.

5. A compound according to claim 1, wherein the sum of n, p and q together does not exceed 3.

6. A compound according to claim 1, wherein $R_4$ is hydrogen or $C_1$-$C_3$alkyl.

7. A compound according to claim 1, wherein $R_5$ is methyl or ethyl.

8. A compound according to claim 1, wherein Y is the -CH= group and m is 2, and both radicals X are chlorine in the 2-position and trifluoromethyl in the 4-position, R is hydrogen, $R_4$ is hydrogen or $C_1$-$C_3$alkyl and $R_5$ is hydrogen, methyl or ethyl, and the sum of n, p and q together does not exceed 3.

9. A compound according to claim 1, wherein Y is nitrogen, m is 1 and x is trifluoromethyl in the 5-position, R is hydrogen, $R_4$ is hydrogen or $C_1$-$C_3$alkyl and $R_5$ is hydrogen, methyl or ethyl, and the sum of n, p and q together does not exceed 3.

10. A compound according to claim 1 of the general formula Ia

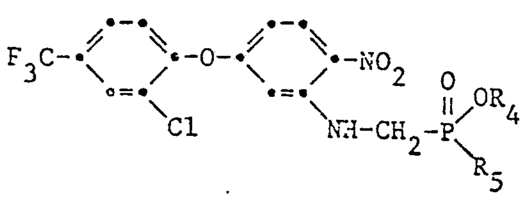

wherein $R_4$ is hydrogen, methyl or ethyl, and $R_5$ is methyl or ethyl.

11. A compound according to claim 1 of the general formula Ib

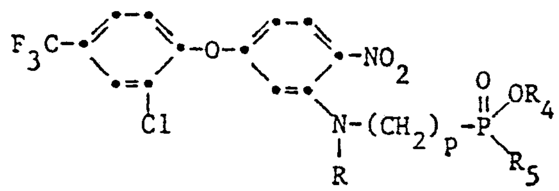

wherein R is hydrogen, methyl or benzyl, $R_4$ is hydrogen, ethyl or isopropyl, $R_5$ is hydrogen, and p is a value from 1 to 3.

12. A compound according to claim 1 of the general formula Ic

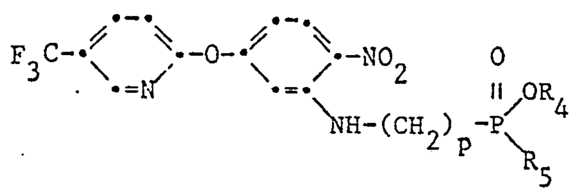

wherein $R_4$ is hydrogen, ethyl or isopropyl, $R_5$ is methyl, and p is a value from 1 to 3.

13. Ethyl N-[2-nitro-5-(2-chloro-4-trifluoromethylphenoxy)-phenyl]-P-ethylaminomethylphosphinate according to claim 1.

14. A process for the preparation of a compound of the formula I, which comprises reacting a dinitrophenylaryl ether of the formula II

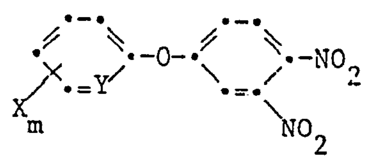

wherein X, Y and m are as defined for formula 1, with an aminoalkylphosphinic or aminoalkylphosphonous acid derivative of the formula III

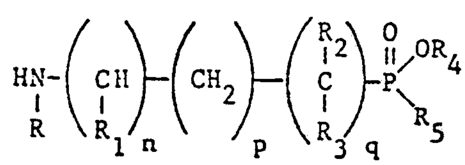

wherein R, $R_1$, $R_2$, $R_3$, n, p and q are as defined for formula I, and $R_4$ is $C_1$-$C_4$alkyl and $R_5$ is hydrogen or $C_1$-$C_4$alkyl,and, if desired, hydrolysing the reaction product to give the free acid and converting the free acid into a salt by further reaction with a base.

15. A herbicidal and plant growth regulating composition which contains as active component at least one compound of the formula 1 according to claim 1.

16. A method of controlling undesired plant growth or of regulating plant growth, which comprises applying to plants, to the locus thereof or to parts of plants a compound of the formula 1 as claimed in claim 1 or a composition containing such a compound.

17. A method according to claim 16, which comprises controlling weeds in rice.

**Claims** for the Contracting State: AT

1. A herbicidal and plant growth regulating composition which contains as active component at least one (2-nitro-5-phenoxyphenylamino)alkylphosphinic, (2-nitro-5-phenoxyphenyl-amino)alkylphosphonous, (2-nitro-5-pyridoxyphenylamino)alkylphosphinic or (2-nitro-5-pyridoxyphenylamino)alkylphosphonous acid derivative of the general formula I

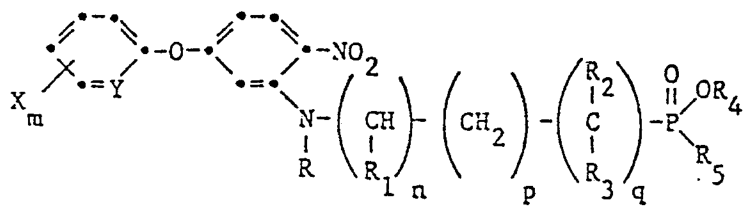

wherein
X is halogen, $CF_3$, $NO_2$, CN, $CONH_2$ or $CSNH_2$,
Y is nitrogen or -CH=,
R is hydrogen, $C_1$-$C_4$alkyl or aralkyl containing 1 to 4 carbon atoms in the alkyl moiety,
$R_1$ is $C_1$-$C_4$alkyl,
$R_2$ is $C_1$-$C_4$alkyl, phenyl or -$PO(OR_6)_2$,
$R_3$ is hydrogen or $C_1$-$C_4$alkyl,
$R_4$ is hydrogen, $C_1$-$C_4$alkyl or a cation,
$R_5$ is hydrogen or $C_1$-$C_4$alkyl,
$R_6$ is hydrogen or $C_1$-$C_4$alkyl,
m is a value from 0 to 3,
n is 0 or 1,
p is a value from 0 to 3 and
q is C or 1,
with the proviso that $R_1$ and $R_3$ taken together may also be an unsubstituted or substituted $C_1$-$C_3$alkylene chain and that at least one of the symbols n, p and q is a value different from 0.

2. A composition according to claim 1, wherein m is 2.

3. A composition according to claim 1, wherein X is trifluoromethyl or chlorine.

4. A composition according to claim 1, wherein R is hydrogen.

5. A composition according to claim 1, wherein the sum of n, p and q together does not exceed 3.

6. A composition according to claim 1, wherein $R_4$ is hydrogen or $C_1$-$C_3$ alkyl.

7. A composition according to claim 1, wherein $R_5$ is methyl or ethyl.

8. A composition according to claim 1, wherein Y is the -CH= group and m is 2, and both radicals X are chlorine in the 2-position and trifluoromethyl in the 4-position, R is hydrogen, $R_4$ is hydrogen or $C_1$-$C_3$alkyl and $R_5$ is hydrogen, methyl or ethyl, and the sum of n, p and q together does not exceed 3.

9. A composition according to claim 1, wherein Y is nitrogen, m is 1 and X is trifluoromethyl in the 5-position, R is hydrogen, $R_4$ is hydrogen or $C_1$-$C_3$alkyl and $R_5$ is hydrogen, methyl or ethyl, and the sum of n, p and q together does not exceed 3.

10. A composition according to claim 1, wherein the active component is of the general formula Ia

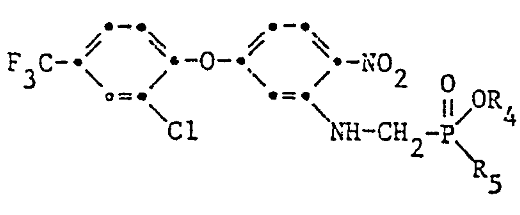

wherein $R_4$ is hydrogen, methyl or ethyl, and $R_5$ is methyl or ethyl.

11. A composition according to claim 1, wherein the active component is of the general formula Ib

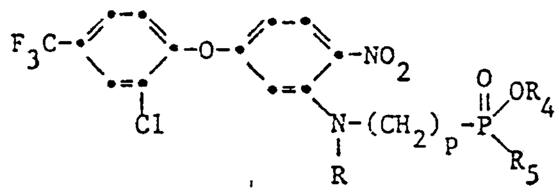

wherein R is hydrogen, methyl or benzyl, $R_4$ is hydrogen, ethyl or isopropyl, $R_5$ is hydrogen, and p is a value from 1 to 3.

12. A composition according to claim 1, wherein the active component is of the general formula Ic

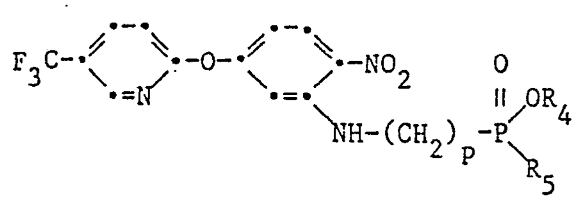

wherein $R_4$ is hydrogen, ethyl or isopropyl, $R_5$ is methyl, and p is a value from 1 to 3.

13. A composition according to claim 1, which contains as active ingredient ethyl N-[2-nitro-5-(2-chloro-4-trifluoromethylphenoxy)phenyl]-P-ethylaminomethylphosphinate.

14. A process for the preparation of a compound of the formula I, which comprises reacting a dinitrophenylaryl ether of the formula II

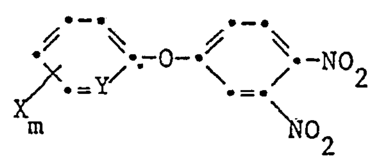

wherein X, Y and m are as defined for formula I, with an aminoalkylphosphinic or aminoalkylphosphonous acid derivative of the formula III

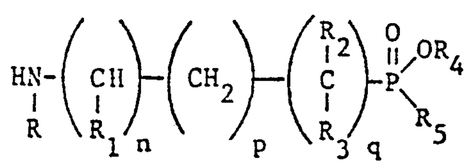

wherein R, $R_1$, $R_2$, $R_3$, n, p and q are as defined for formula I, and $R_4$ is $C_1$-$C_4$alkyl and $R_5$ is hydrogen or $C_1$-$C_4$alkyl,and, if desired, hydrolysing the reaction product to give the free acid and converting the free acid into a salt by further reaction with a base.

15. A method of controlling undesired plant growth or of regulating plant growth, which comprises applying to plants, to the locus thereof or to parts of plants a compound of the formula I as claimed in claim 1 or a composition containing such a compound.

16. A method according to claim 15, which comprises controlling weeds in rice.

**Revendications** pour les Etats contractants: BE, DE, FR, GB, IT, NL, CH, LI

1 - Dérivés d'acides (2-nitro-5-phénoxy- ou 5-pyridoxy-phénylamino)-alkylphosphiniques et -phosphoneux de formule génerale I

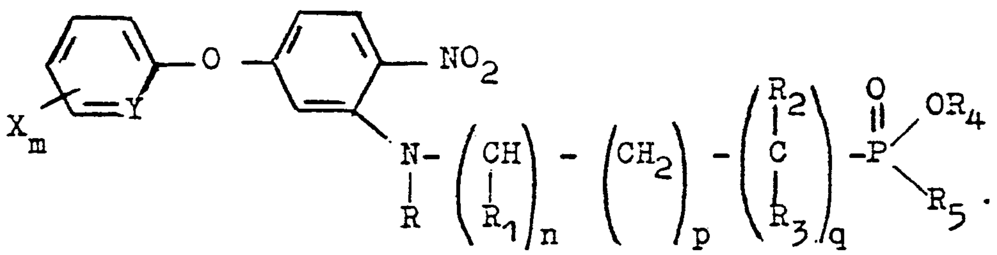

dans laquelle

X représente un halogène, $CF_3$, $NO_2$, CN, $CONH_2$ ou $CSNH_2$,

Y représente l'azote ou,-CH=,

R représente l'hydrogène, un groupe alkyle en C 1-C 4 ou aralkyle contenant 1 à 4 atomes de carbone dans la partie alkyle,

$R_1$ représente un groupe alkyle en C 1-C 4,

$R_2$ représente un groupe alkyle en C 1-C 4, phényle ou $-PO(OR_6)_2$,

$R_3$ représente l'hydrogène ou un groupe alkyle en C 1-C 4,

$R_4$ représente l'hydrogène, un groupe alkyle en C 1-C 4 ou un cation,

$R_5$ représente l'hydrogène ou un groupe alkyle en C 1-C 4,

$R_6$ représente l'hydrogène ou un groupe alkyle en C 1-C 4,

m est un nombre allant de 0 à 3,

n est égal à C ou 1,

p est un nombre allant de 0 à 3, et

q est egal à 0 ou 1,

$R_1$ et $R_3$ pouvant également former ensemble une chaîne alkylène en C 1-C 3 éventuellement substituée, et l'un au moins des symboles n, p et q représentant un nombre différent de 0.

2 - Composés selon la revendication 1, caractérisés en ce que m est égal à 2.

3 - Composés selon la revendication 1, caractérisés en ce que X représente le groupe trifluorométhyle ou le chlore.

4 - Composés selon la revendication 1, caractérisés en ce que R représente l'hydrogène.

5 - Composés selon la revendication 1, caractérisés en ce nue la somme de n, p et q est au maximum égale à 3.

6 - Composés selon la revendication 1, caractérisés en ce que $R_4$ représente l'hydrogène ou un groupe alkyle en C 1-C 3.

7 - Composés selon la revendication 1, caractérisés en ce que $R_5$ représente un groupe méthyle ou éthyle.

8 - Composés selon la revendication 1, caractérisés en ce que Y représente le groupe -CH= et m est égal à 2, les deux symboles X représentent le chlore en position 2 et un groupe trifluorométhyle en position 4, R représente l'hydrogène, $R_4$ représente l'hydrogène ou un groupe alkyle en C 1-C 3 et $R_5$ représente l'hydrogène, un groupe méthyle ou éthyle, la somme de n, p et q étant au maximum égale à 3.

9 - Composés selon la revendication 1, caractérisés en ce que Y représente l'azote, m est égal à 1 et X représente un groupe trifluorométhyle en position 5, R représente l'hydrogène, $R_4$ représente l'hydrogène ou un groupe alkyle en C 1-C 3 et $R_5$ représente l'hydrogene, un groupe méthyle ou éthyle, la somme de n, p et q étant au maximum égale à 3.

10 - Composés selon la revendication 1, caractérisés en ce qu'ils répondent à la formule générale Ia

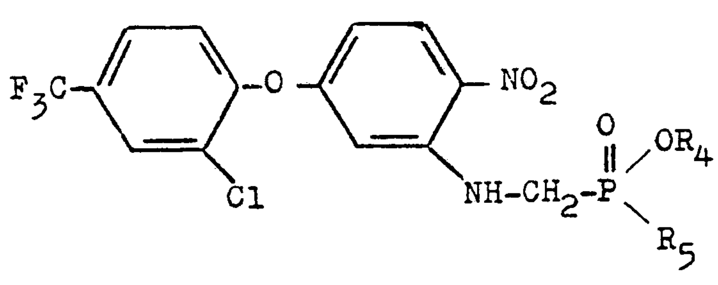

dans laquelle $R_4$ représente l'hydrogène, un groupe methyle ou éthyle et $R_5$ represente un groupe méthyle ou éthyle.

11 - Composés selon ls revendication 1, caractérisés en ce qu'ils répondent à la formule générale Ib

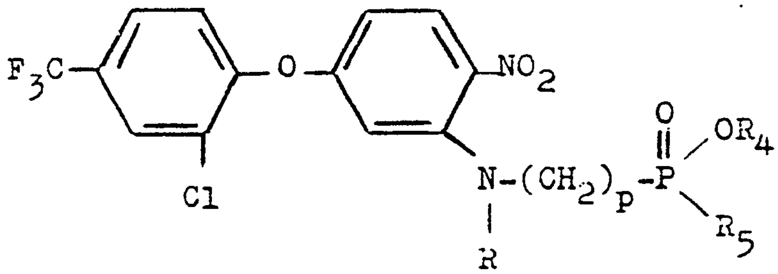

dans laquelle R représente l'hydrogène, un groupe méthyle ou benzyle, $R_4$ représente l'hydrogène, un groupe éthyle ou isopropyle, $R_5$ représente l'hydrogène et p est un nombre de 1 à 3.

12 - Composés selon la revendication 1, caractérisés en ce qu'ils répondent à la formule génerale Ic

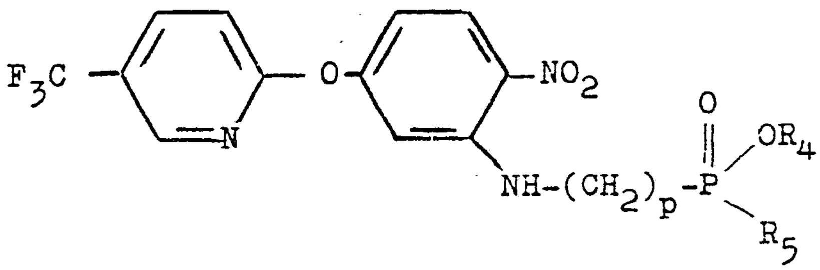

dans laquelle $R_4$ représente l'hydrogène, un groupe éthyle ou isopropyle, $R_5$ représente un groupe méthyle et p est un nombre allant de 1 à 3.

13 - Le N-[2-nitro-5-(2-chloro-4-trifluoro-méthylphénoxy)-phényl]-P-éthyl-aminométhylphoaphinate d'éthyle selon la revendication 1.

14 - Procédé de préparation des composés de formule I, caractérisé en ce que l'on fait réagir un éther dinitrophénylarylique de formule II

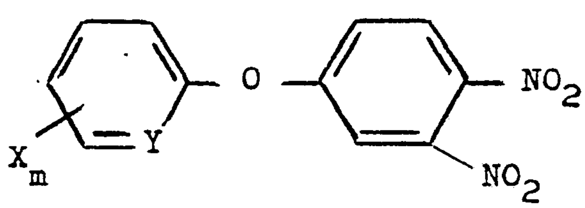

dans laquelle X, Y et m ont les significations indiquées en référence à la formule I, avec un dérivé d'acide aminoalkylphosphinique ou -phosphoneux de formule III

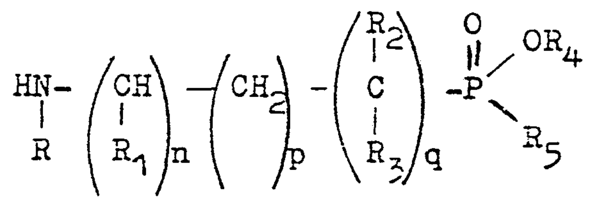

dans laquelle R, $R_1$, $R_2$, $R_3$, n, p et q ont les significations indiquées en référence à la formule I et $R_4$ représente un groupe alkyle en C 1-C 4 et $R_5$ l'hydrogène ou un groupe alkyle en C 1-C 4, et le cas échéant, on convertit en l'acide libre par hydrolyse puis on convertit en un sel par une réaction subséquente avec une base.

15 - Produit herbicide et régulateur de la croissance des végétaux, caractérisé en ce qu'il contient en tant que composant actif au moins un composé de formule I selon la revendication 1.

16 - Procédé pour combattre les croissances de végétaux indésirables ou pour exercer un effet regulateur sur la croissance des végétaux, caractérisé en ce que l'on applique un composé de formule I selon la revendication 1 ou un produit contenant un composé de formule I sur les vegetaux, leur habitat ou des parties des végétaux.

17 - Procédé selon la revendication 16, pour combattre les mauvaises herbes dans les cultures de riz.

**Revendications** pour l'Etat contractant: AT

1 - Agents herbicides et régulateurs de la croissance des végétaux, caractérisés en ce qu'ils comportent comme composés actifs au moins un dérivé d'acide (2-nitro-5-phénoxy- ou 5-pyridoxy-phénylamino)-alkylphosphiniques et -phosphoneux de formule générale I

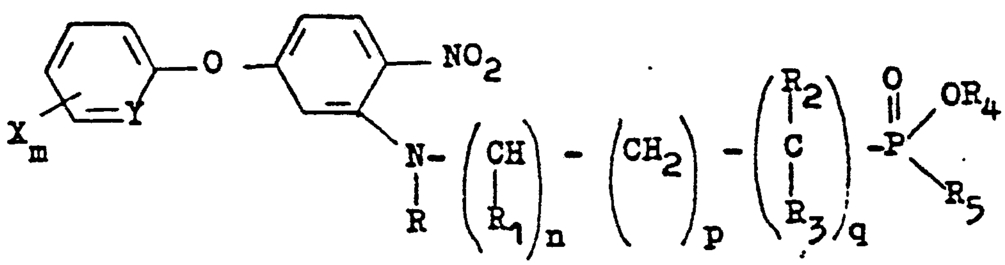

dans laquelle

X représente un halogène, $CF_3$, $NO_2$, CN, $CONH_2$ ou $CSNH_2$,

Y représente l'azote ou -CH=,

R représente l'hydrogène, un groupe alkyle en C 1-C 4 ou aralkyle contenant 1 à 4 atomes de carbone dans la partie alkyle,

$R_1$ représente un groupe alkyle en C 1-C 4,

$R_2$ représente un groupe alkyle en C 1-C 4, phényle ou $-PO(OR_6)_2$,

$R_3$ représente l'hydrogène ou un groupe alkyle en C 1-C 4,

$R_4$ représente l'hydrogène, un groupe alkyle en C 1-C 4 ou un cation,

$R_5$ représente l'hydrogène ou un groupe alkyle en C 1-C 4,

$R_6$ représente l'hydrogène ou un groupe alkyle en C 1-C 4,

m est un nombre allant de 0 à 3,

n est égal à 0 ou 1,

p est un nombre allant de 0 à 3, et

q est égal à 0 ou 1, où

$R_1$ et $R_3$ pouvant également former ensemble une chaîne alkylène en C 1-C 3 éventuellement substituée, et où l'un au moins des symboles n, p et q représentant un nombre différent de 0.

2 - Agents selon la revendication 1, caractérisés en ce que m est égal à 2.

3 - Agents selon la revendication 1, caractérisés en ce que X représente le groupe trifluorométhyle ou le chlore.

4 - Agents selon la revendication 1, caractérisés en ce que R représente l'hydrogène.

5 - Agents selon la revendication 1, caractérisés en ce que la somme de n, p et q est au maximum égale à 3.

6 - Agents selon la revendication 1, caractérisés en ce que $R_4$ représente l'hydrogène ou un groupe alkyle en C 1-

7 - Agents selon la revendication 1, caractérisés en ce que $R_5$ représente un groupe méthyle ou éthyle.

8 - Agents selon la revendication 1, caractérisés en ce que Y représente le groupe -CH= et m est égal à 2, les deux symboles X représentent le chlore en position 2 et un groupe trifluorométhyle en position 4, R représente l'hydrogène, $R_4$ représente l'hydrogène ou un groupe alkyle en C 1-C 3 et $R_5$ représente l'hydrogène, un groupe méthyle ou éthyle, la somme de n, p et q étant au maximum égale à 3.

9 - Agents selon la revendication 1, caractérisés en ce que Y représente l'azote, m est égal à 1 et X représente un groupe trifluorométhyle en position 5, R représente l'hydrogène, $R_4$ représente l'hydrogène ou un groupe alkyle en C 1-C 3 et $R_5$ représente l'hydrogène, un groupe méthyle ou éthyle la somme de n p et q étant au maximum égale à 3.

10 - Agents selon la revendication 1, caractérisés en ce que le composé actif répond à la formule générale Ia

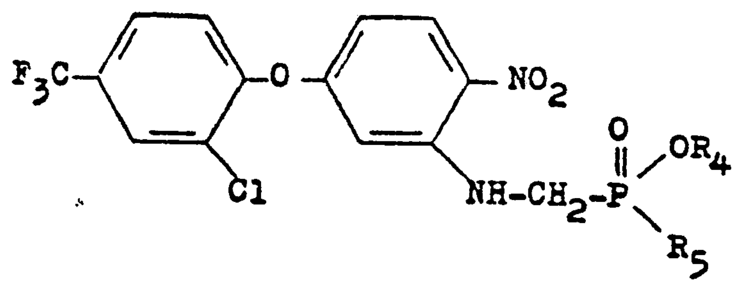

dans laquelle $R_4$ représente l'hydrogène, un groupe méthyle ou éthyle et $R_5$ représente un groupe méthyle ou éthyle.

11 - Agents selon la revendication 1, caractérisés en ce que le composé actif répond à la formule générale Ib

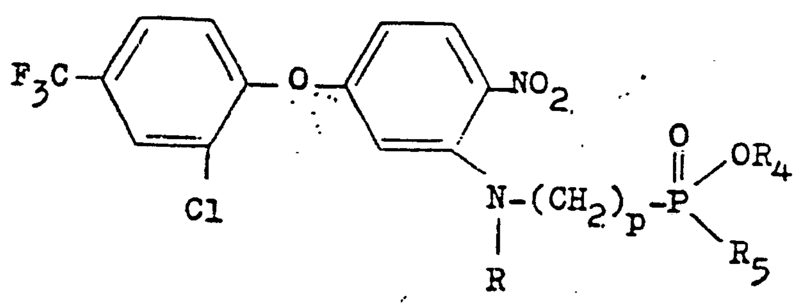

dans laquelle R représente l'hydrogène, un groupe méthyle ou benzyle, $R_4$ représente l'hydrogène, un groupe éthyle ou isopropyle, $R_5$ représente l'hydrogène et p est un nombre de 1 à 3.

12 - Agents selon la revendication 1, caractérisés en ce que le composé actif répond à la formule générale Ic

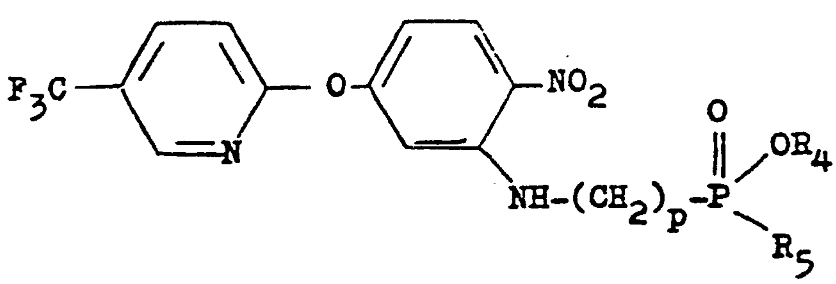

dans laquelle $R_4$ représente l'hydrogène, un groupe éthyle ou isopropyle, $R_5$ représente un groupe méthyle et p est un nombre allant de 1 à 3.

13 - Agents selon la revendication 1, caractérisés en ce qu'ils contiennent, comme composé actif le N-[2-nitro-5-(2-chloro-4-trifluorométhylphénoxy)-phényl]-p-éthyl-aminométhylphosphinate d'éthyle.

14 - procédé de préparation des composés de formule I, caractérisé en ce que l'on fait réagir un éther dinitrophénylarylique de formule II

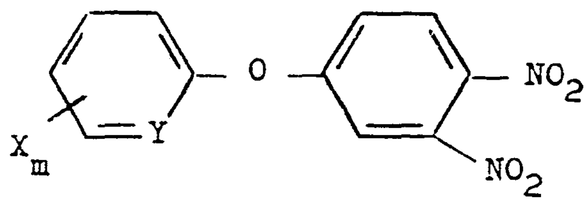

dans laquelle X, Y et m ont les significations indiquées en référence à la formule I, avec un dérivé d'acide aminoalkylphosphinique ou -phosphoneux de formule III

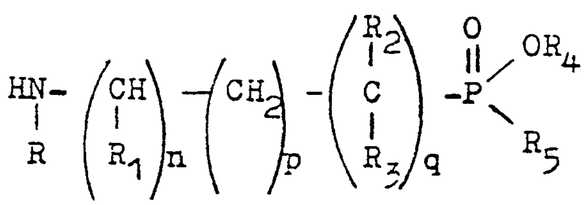

dans laquelle R, $R_1$, $R_2$, $R_3$, n, p et q ont les significations indiquées en référence à la formule I et $R_4$ représente un groupe alkyle en C 1-C 4 et $R_5$ l'hydrogène ou un groupe alkyle en C 1-C 4, et le cas échéant, on convertit en l'acide libre par hydrolyse puis on convertit en un sel par une réaction subséquente avec une base.

15 - Procédé de lutte contre la croissance de végétaux indésirables et de régulation de la croissance des végétaux, caractérisé en ce qu'on applique un composé de formule 1 selon la revendication 1 ou un produit contenant un composé de formule 1, sur des plantes, leurs emplacements ou des parties de plantes.

16 - procédé selon la revendication 15, pour combattre les mauvaises herbes dans les cultures de riz.